# EUROPÄISCHE PATENTANMELDUNG

(11) **EP 1 491 316 A2**
(43) Veröffentlichungstag der Anmeldung: **29.12.2004**
(21) Anmeldenummer: 04011539.6
(22) Anmeldetag: 14.05.2004
(51) Int. Cl.: B29C 45/14, B29C 44/12, B29C 44/16

(54) **Verfahren zum Herstellen eines Kunststoffverbundbauteils, insbesondere eines Karosserieanbauteils**

(30) Priorität: 23.06.2003 DE 10328046
(71) Anmelder: ArvinMeritor GmbH, 63128 Dietzenbach (DE)
(72) Erfinder: Ludwig, Matthias, 38159 Vechelde (DE); Lutz, Marcus, 38518 Gifhorn (DE); Niebuhr, Frank, 38518 Wilsche (DE)
(74) Vertreter: Kitzhofer, Thomas, Dipl.-Ing.

(57) **Zusammenfassung**

Zur Herstellung eines Verbundbauteils für ein Fahrzeug wird eine Kunststoffoder Metallfolie (10) plastisch verformt, wobei im Tiefzieh- oder Schäumwerkzeug ein auswechselbares, dünnes Applikationsnegativ befestigt wird, das eine Einbuchtung in der Folie (10) erzeugt, die sich auch nach dem Hinterschäumen oder Hinterspritzen noch außenseitig abzeichnet.

## Beschreibung

Die Erfindung betrifft ein Verfahren zum Herstellen eines Verbundbauteils, insbesondere eines Karosserieanbauteils.

Verbundbauteile werden in Fahrzeugen im Fahrzeuginnenraum und zunehmend als Karosserieanbauteile, z.B. als Dachmodul oder Klappen (Motorhaube, Kofferraumdeckel, Tankdeckel etc.), als Stoßfänger oder Kotflügel etc. eingesetzt. Diese Karosserieanbauteile definieren in montiertem Zustand zumindest einen Abschnitt der Außenhaut des Fahrzeugs.

Es sind Karosserieanbauteile, die als Verbundmaterial hergestellt werden, bekannt, bei denen eine thermoplastische Folie oder Metallfolie zuerst in einem Tiefziehprozeß plastisch verformt und anschließend hinterspritzt wird.

Bei Fahrzeugen besteht darüber hinaus der zunehmende Wunsch nach Individualisierung. Werbeflächen, großflächige Logos des Automobilherstellers oder Tuners oder andere Designelemente werden nachträglich z.B. durch Lackieren aufgebracht, oder es werden nachträglich Folien auf das Karosserieanbauteil aufgeklebt.

Aufgabe der Erfindung ist es, eine einfache Möglichkeit einer hochwertig aussehenden Oberflächengestaltung zu schaffen.

Dies wird durch ein Verfahren mit folgenden Schritten erreicht:
a) wenigstens ein dünnes Applikationsnegativ wird an einer Innenwand eines Werkzeugs positioniert,
b) eine Folie wird im Werkzeug plastisch verformt und dabei gegen die Innenwand und das Applikationsnegativ gepreßt, so daß das Applikationsnegativ eine komplementäre, bleibende Einbuchtung in der Folie hinterläßt, wobei die plastisch verformte Folie auf einer Seite hinterschäumt oder hinterspritzt wird.

Unter Applikationen sind plastisch zurückspringende oder vorspringende Muster/Bilder/Buchstaben oder Zahlen zu verstehen, also im weitesten Sinne Dekore.

Die Erfindung sieht das Aufbringen einer Applikation durch Erzeugung eines Höhensprungs vor, was dem Bauteil einen sehr hochwertigen Qualitätseindruck gibt. Bislang war es, gerade bei Karosserieanbauteilen aus Blech, nicht möglich, diese durch minimale Vertiefungen individuell zu gestalten, da die Werkzeuge zum Tiefziehen von Blech extrem teuer sind und keine Individualisierung erlauben.

Bei Einsatz einer zu hinterschäumenden thermoplastischen oder Metallfolie kann die Applikation sehr einfach nach Kundenwunsch verwirklicht werden, denn das dünne, großflächige, von der Innenwand abstehende Applikationsnegativ ist relativ günstig in der Herstellung, kann z.B. mittels Laser aus einem foliendicken Metallblech herausgeschnitten werden, und wird nur für die Herstellung des individualisierten Verbundbauteils in das Werkzeug eingelegt, um anschließend wieder einfach aus diesem herausgenommen zu werden.

Das Applikationsnegativ sorgt für eine bleibende Einbuchtung in der Folie. Wird die Einbuchtung in einem Tiefziehwerkzeug vor dem Hinterschäumen oder Hinterspritzen erzeugt, so wird diese Einbuchtung beim anschließenden Hinterschäumen oder Hinterspritzen durch den dabei entstehenden Schäum- oder Spritzdruck nicht mehr rückgängig gemacht. Darüber hinaus kann die Einbuchtung aber auch erst beim Hinterschäumen oder Hinterspritzen erzeugt werden, indem der Schaumdruck, der bis zu 8 bar ansteigen kann, die Folie so stark gegen die Innenwand und das Applikationselement drückt, daß die Folie eine bleibende Einbuchtung erhält.

Das Applikationsnegativ hat eine maximale Dicke von 75% der thermoplastischen Folie und ist weiter vorzugsweise eine Metallfolie, z.B. aus A1 oder Fe.

Die Folie wird vorzugsweise mit PUR-Material hinterschäumt oder hinterspritzt, wobei das PUR-Material faserverstärkt sein kann (z.B. sogenanntes Long-Fiber-Injection-Verfahren).

Falls ein Tiefziehen vorgesehen ist, bei dem auch die Einbuchtung erzeugt wird, muß im anschließend verwendeten Schäumwerkzeug, in das die Folie eingelegt wird, kein der Einbuchtung oder dem Vorsprung als Auflage für die Folie dienender komplementärer Vorsprung bzw. komplementäre Einbuchtung vorgesehen sein, so daß der einzige Aufwand zur Herstellung des individualisierten Karosserieanbauteils darin besteht, das Applikationsnegativ herzustellen und im Tiefziehwerkzeug zu positionieren.

Diese Positionierung kann beispielsweise mittels eines Magneten erfolgen. Das Applikationsnegativ kann auch eingeklebt werden, wobei es trotz Klebens einfach und rückstandsfrei wieder von der Innenwand lösbar ist.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
Figuren 1 bis 3 schematische Querschnittsansichten verschiedener Schritte des erfindungsgemäßen Verfahrens und

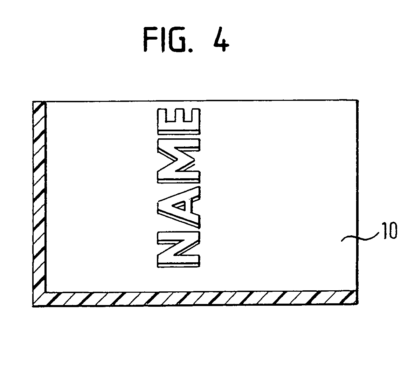

Figur 4 eine Draufsicht auf ein durch das erfindungsgemäße Verfahren erzeugtes Kunststoffverbundbauteil.

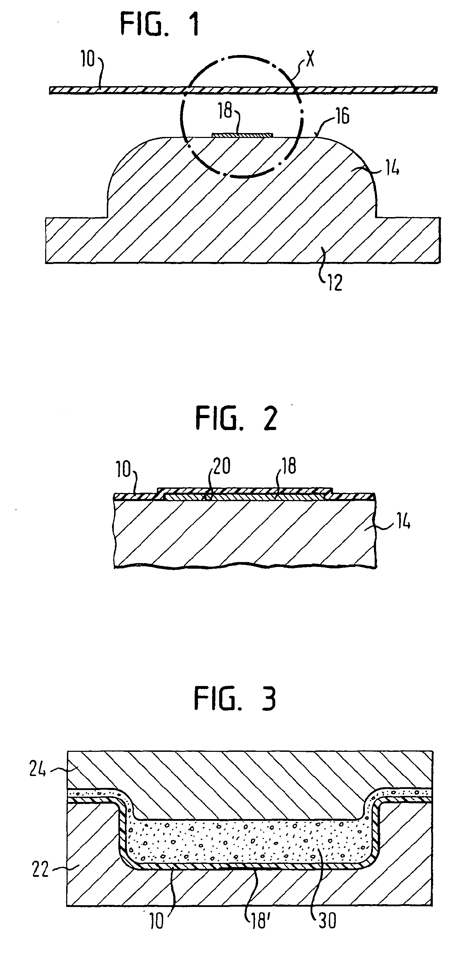

In Figur 1 ist eine plattenförmige, 0,5 bis 2 mm dicke Folie 10 aus Metall oder thermoplastischem Kunststoff dargestellt, wobei die Folie 10 ein- oder mehrschichtig ausgeführt und, bei Kunststoff, durchgefärbt sein kann.

Die Folie 10 wird in einem Tiefziehwerkzeug positioniert, z. B indem die Ränder der Folie abschnittsweise geklemmt werden. Ein Stempel 12 des Tiefziehwerkzeugs hat einen erhöhten Teil 14, der durch eine im wesentlichen ebene Innenwand 16 definiert ist. Die absatzlose, großflächige Innenwand 16 ist der Folie 10 zugewandt. Auf die Innenwand 16 ist ein Applikationsnegativ 18 in Form wenigstens eines dünnen, separaten Teiles aufgesetzt und am Tiefziehwerkzeug lösbar befestigt.

Das Applikationsnegativ 18 ist eine lasergeschnittene Metallfolie mit einer maximalen Dicke von 1, vorzugsweise nur 0,5 mm.

Der Stempel 12 verformt die Folie 10, wobei der Stempel 12 bei Verwendung einer thermoplastischen Folie zusätzlich beheizt ist. Das Applikationsnegativ 18 sorgt beim Tiefziehprozeß für eine zum Applikationsnegativ 18 komplementäre, bleibende, flächige Einbuchtung 20 in der Folie 10 und eine auf der gegenüberliegenden Seite entsprechende Erhebung, wie Figur 2 zeigt. Figur 2 ist eine vergrößerte Ansicht des in Figur 1 mit X bezeichneten Bereichs, die den Kontakt der Folie 10 mit dem Stempel 12 zeigt. Beim Tiefziehprozeß liegen die Innenwand 16 und das Applikationsnegativ 18 vollflächig an der Folie 10 an. Die Folie 10 ist relativ dünn, bezogen auf die Dicke des Applikationsnegativs 18.

Die Dicke des Applikationsnegativs 18 beträgt maximal 75% der Dicke der tiefgezogenen Folie 10.

Die tiefgezogene Folie 10 wird dem Tiefziehwerkzeug entnommen und in ein Schäumwerkzeug gelegt, und zwar mit der Erhebung nach außen weisend. Das Schäumwerkzeug hat ein Unterteilteil und ein Oberteil 22 bzw. 24. Die tiefgezogene Folie 10, die wannenförmig ist, wird in das Unterteil 22 eingelegt. Das Unterteil 22 hat eine kontinuierliche, plane Innenseite im Bereich der an der Folie 10 gebildeten Erhebung, d.h. die Innenseite ist nicht auf die Erhebung abgestimmt und hat keine entsprechende Vertiefung. Anschließend wird rückseitig auf die Folie 10 flüssiges PUR aufgebracht, was im sogenannten PUR S-RIM-Verfahren erfolgen kann oder im sogenannten LFI-Verfahren, bei dem das PUR-Material faserverstärkt wird. Schließlich wird das Oberteil 24 nach unten zum Ausschäumen gefahren.

Es entsteht schließlich ein Verbundbauteil aus einer Folie 10 und einer Hinterschäumung 30.

Das Verbundbauteil ist vorzugsweise ein Karosserieanbauteil, im vorliegenden Fall ein Fahrzeugdachmodul, bei dem die von außen erhabene Applikation dem Bauteil einen gesteigerten optischen Wert gibt, vergleichbar einem "Wasserzeichen".

Zu betonen ist, daß die Applikation natürlich nicht unbedingt erhaben sein muß, sie kann auch in Form einer Vertiefung ausgeführt sein, indem entweder die Folie auf der mit der erhabenen Seite hinterschäumt wird, oder indem ein noch großflächigeres Applikationsnegativ mit einzelnen, beabstandeten Erhebungen in das Werkzeug eingelegt wird und die Folie 10 zwischen den Erhebungen vertiefte Bereiche bekommt.

Gemäß einer zweiten Ausführungsform des erfindungsgemäßen Verfahrens erhält die Folie 10 nicht im vorhergehenden Tiefziehprozeß die Einbuchtung, sondern erst im Schäumprozeß. Zur Erläuterung dieses Verfahrens kann Fig. 3 ebenfalls verwendet werden. Die Folie kann, muß jedoch nicht vor dem Einlegen in das Schäumwerkzeug tiefgezogen worden sein. Auf der Innenseite des Unterteils 22 wird das Applikationsnegativ 18' lösbar befestigt. Der Schäumdruck sorgt dafiir, daß die Folie verformt wird und an dem am Applikationselement 18' anliegenden Abschnitt eine, wie zuvor bereits erläuterte Einbuchtung erhält. Auch die gesamte plastische Verformung der Folie 10 kann durch den Schäumdruck erzielt werden.

Beide obigen Ausführungsformen können natürlich auch dahingehend modifiziert werden, daß die Folie 10 hinterspritzt wird. Dabei wird flüssiger Kunststoff bei geschlossenem Werkzeug in den durch Ober- und Unterteil 22,24 gebildeten Hohlraum eingespritzt. Das Bezugszeichen 30 bezeichnet dann die durch Hinterspritzen hergestellte Kunststoffschicht.

### Bezugszeichenliste

- 10: Folie
- 12: Stempel
- 14: erhöhter Teil
- 16: Innenwand
- 18, 18': Applikationsnegativ
- 20: Einbuchtung
- 22: Unterteil
- 24: Oberteil
- 30: Hinterschäumung

## Patentansprüche

1. Verfahren zum Herstellen eines Kunststoffverbundbauteils, insbesondere Karosserieanbauteils, **gekennzeichnet durch** folgende Schritte:
c) wenigstens ein dünnes Applikationsnegativ (18; 18') wird an einer Innenwand (16) eines Werkzeugs positioniert,
d) eine Folie (10) wird im Werkzeug plastisch verformt und dabei gegen die Innenwand (16) und das Applikationsnegativ (18; 18') gepreßt, so daß das Applikationsnegativ (18; 18') eine komplementäre, bleibende Einbuchtung (20) in der Folie (10) hinterläßt, wobei die plastisch verformte Folie (10) auf einer Seite hinterschäumt oder hinterspritzt wird.

2. Verfahren nach Anspruch 1, **dadurch gekennzeichnet, daß** das Applikationsnegativ (18) eine Dicke hat, die maximal 75% der Dicke der Folie (10) beträgt.

3. Verfahren nach einem der vorhergehenden Ansprüche, **dadurch gekennzeichnet, daß** das Applikationsnegativ (18; 18') eine Metallfolie ist.

4. Verfahren nach einem der vorhergehenden Ansprüche, **dadurch gekennzeichnet, daß** das Applikationsnegativ (18; 18') durch Laserschneiden hergestellt wird.

5. Verfahren nach einem der vorhergehenden Ansprüche, **dadurch gekennzeichnet, daß** die Folie (10) mit flüssigem PUR-Material hinterschäumt oder hinterspritzt wird.

6. Verfahren nach Anspruch 5, **dadurch gekennzeichnet, daß** das PUR-Material faserverstärkt ist.

7. Verfahren nach einem der vorhergehenden Ansprüche, **dadurch gekennzeichnet, daß** in den Schritten a) und b) das Applikationsnegativ (18) bzw. die Folie (10) in einem Tiefziehwerkzeug positioniert und die Folie (10) im Tiefziehwerkzeug unter Bildung einer Einbuchtung (20) tiefgezogen wird.

8. Verfahren nach Anspruch 7, **dadurch gekennzeichnet, daß** nach dem Tiefziehen die Folie (10) in ein Schäumwerkzeug eingelegt wird, das im Bereich der Einbuchtung (20) keine der anliegenden Folienoberfläche entsprechende Vertiefung oder Erhöhung besitzt.

9. Verfahren nach einem der vorhergehenden Ansprüche, **dadurch gekennzeichnet, daß** in den Schritten a) und b) das Applikationsnegativ (18') bzw. die Folie (10) in einem Schäumwerkzeug positioniert wird und die Folie (10) im Schäumwerkzeug unter Bildung einer Einbuchtung (20) hinterschäumt wird.

10. Verfahren nach Anspruch 9, **dadurch gekennzeichnet, daß** die Folie (10) vor dem Einlegen in das Schäumwerkzeug tiefgezogen wird, im Schäumwerkzeug aber die durch das Applikationsnegativ (18') erzeugte Einbuchtung (20) erhält.

11. Verfahren nach einem der vorhergehenden Ansprüche, **dadurch gekennzeichnet, daß** die Folie (10) eine thermoplastische oder eine Metallfolie ist.
